# EUROPEAN PATENT SPECIFICATION

(11) **EP 1 975 258 B1**
(45) Date of publication and mention of the grant of the patent: **24.06.2015**
(21) Application number: 06834786.3
(22) Date of filing: 15.12.2006
(51) Int. Cl.: C21B 7/06, C04B 41/87, F27D 1/16

(54) **PROTECTIVE-UNITED CARBONACEOUS BLOCK FOR BLAST FURNACE AND METHOD OF CONSTRUCTING BLAST FURNACE WITH CARBONACEOUS BLOCK**
SCHUTZVEREINIGTER KOHLENSTOFFHALTIGER BLOCK FÜR HOCHOFEN UND VERFAHREN ZUR KONSTRUKTION EINES HOCHOFENS MIT EINEM KOHLENSTOFFHALTIGEN BLOCK
BLOC CARBONE UNI A UNE PROTECTION POUR HAUT FOURNEAU ET PROCEDE DE FABRICATION D'UN HAUT FOURNEAU AVEC UN BLOC CARBONE

(30) Priority: 15.12.2005 JP 2005362066; 06.12.2006 JP 2006329934
(43) Date of publication of application: 01.10.2008
(73) Proprietor: Nippon Steel & Sumikin Engineering Co., Ltd., Shinagawa-ku, Tokyo 141-8604 (JP)
(72) Inventor: KURAYOSHI, Kazumi, NIPPON STEEL ENGINEERING CO., LTD., Kitakyusyu-city Fukuoka 8048505 (JP); TAGO, Hiroki, NIPPON STEEL ENGINEERING CO., LTD., Kitakyusyu-city Fukuoka 8048505 (JP); NITTA, Michio, NIPPON STEEL CORPORATION, Futtsu-city Chiba 2938511 (JP)
(74) Representative: Jenkins, Peter David
(86) International application number: PCT/JP2006/325043
(87) International publication number: WO 2007/069722

(56) References cited:
- CA-A1- 2 323 764
- JP-A- 1 100 075
- JP-A- 09 295 875
- JP-A- 10 259 080
- JP-U- 56 170 245
- JP-U- 60 049 137
- US-A- 5 766 542

## Description

### TECHNICAL FIELD

The present invention relates to protection of a carbonaceous block used in a blast furnace and a furnace installation method for the carbonaceous block.

### BACKGROUND ART

A blast furnace is a vertical furnace formed by layered bricks. Raw materials are thrown into the blast furnace from an upper portion of the blast furnace. The raw materials include one of or a combination of iron ore, pellets, or burned iron ore respectively containing 50 to 60 percent of iron. The raw materials also include limestone and coke, which serve as solvents to remove impurities, and the like. Hot blast of high temperature is blown into the furnace through a tuyere disposed at a lower circumference of the furnace. The raw materials descending from a furnace top is heated and melted by the hot blast to form pig iron, which is accumulated on a hearth. The pig iron accumulated on the hearth is periodically discharged out of the furnace via a taphole provided to the lower portion of the furnace.

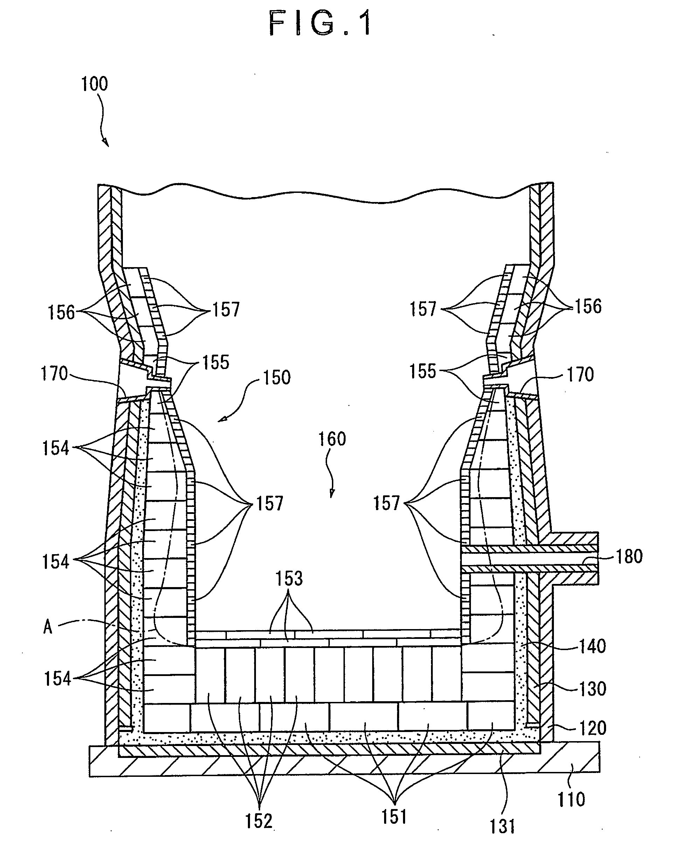

Fig. 1 schematically shows structure of a vicinity of the hearth of a conventional blast furnace. Note that the blast furnace 100 shown in Fig. 1 has not been operated yet.

As shown in Fig. 1, the blast furnace 100 includes: a base 110; a substantially cylindrical furnace shell 120 standing on the base 110; cooling layers 130 and 131 covering a bottom and an inner lower side of the furnace shell 120; a ramming material layer 140 layered on the cooling layers 130 and 131; and a brick layer 150 layered in a manner covering the upper surface of the ramming material layer 140 and an inner central side and an inner upper side of the furnace shell 120. Further in Fig. 1, 160 is a hearth, 170 is a tuyere, and 180 is a taphole.

The brick layer 150 is constructed by combining a plurality of refractory bricks.

Specifically, the refractory bricks in the hearth 160 include: a plurality of deep bricks 151 forming a disc-shaped furnace bottom; vertically-laid bricks 152 vertically laid on the deep bricks 151; a plurality of surface bricks 153 covering a top side of the vertically-laid bricks 152; a plurality of ring bricks 154 layered on the deep bricks 151 to form a cylindrical lateral side around the outer circumference of the vertically-laid bricks 152 and the surface bricks 153; and a tuyere brick 155 and a plurality of bosh bricks 156 further layered on upper side of the ring bricks 154.

The various kinds of bricks except the surface bricks 153 and the tuyere bricks 155 are carbonaceous blocks formed of monolithic carbon bricks possessing a high thermal conductivity, high anti-corrosion, and low porosity. Each of the carbonaceous blocks has a highly abraded surface. A temporary setup of the bricks is prepared at a location other than the actual furnace. After dimensions and the like of the bricks are checked and inspected, mortar is coated to the bricks in the actual furnace to closely set up the bricks without gap.

In addition, the brick layer 150 includes a plurality of small blast-furnace-protective bricks 157 layered in a manner covering an inner surface of the brick layer 150. Incidentally, the blast-furnace-protective bricks 157 are formed by high-alumina or chamotte oxide bricks.

In a startup of the blast furnace 100, the carbonaceous blocks are damaged in several months from the startup because of (1) wear due to throwing in of the raw materials, (2) oxidation upon the startup, and (3) damage due to a large amount of slug generated in the early stage of the operation after the startup. Accordingly, the blast-furnace-protective bricks 157 protect the carbonaceous blocks until the operation stabilizes. Around the timing when the operation stabilizes, the blast-furnace-protective bricks 157 are dropped to retain a predetermined furnace capacity necessary for production of pig iron.

During the stable operation of the blast furnace 100, the brick layer 150 is cooled by the cooling layers 130 and 131 via the ramming material layer 140. However, since the hearth 160 is exposed to a high temperature environment of 1500 degrees Celsius or higher, the ring bricks 154 of the brick layer 150 are damaged melting from the furnace-interior side. When the melting damage of the brick layer 150 advances approximately to an extent shown by the dash line A in the figure, a life of the blast furnace 100 is over and the operation of the blast furnace 100 is suspended.

In the operation of the blast furnace 100 set forth above, the blast-furnace-protective bricks 157 prevent the carbonaceous blocks such as the ring bricks 154 and the like which dissipate during the stable period of the operation from dissipating in the early period of the operation immediately after the startup. The blast-furnace-protective bricks 157 are dropped during the stable period of the operation, so that the necessary furnace capacity of the hearth 160 is retained.

A repair work of the entire blast furnace 100 is conducted after the operation of the blast furnace 100 is suspended. All the components including a mantel are usually dismantled and installed in the repair work. In installation of the blast furnace 100, a large amount of time is spent in dismantling and installing the brick layer 150. Therefore, a variety of construction methods for reducing time needed to install the brick layer 150 in order to, even if only slightly, shorten suspension of pig iron production have conventionally been disclosed (see, Patent Documents 1 and 2).

According to an arrangement disclosed in Patent Document 1, a plurality of individual carbon bricks are adhered to each other by a carbon adhesive to prepare coupled bricks in advance.. The coupled bricks are layered without adhesion for temporary setup to adjust and check the dimension of the temporary setup. Subsequently, the coupled bricks are adhered by mortar and undergo final setup in the actual furnace.

According to such an arrangement disclosed in Patent Document 1, a number of units of carbon bricks involved are decreased as compared to a conventional arrangement, so that a number of adhering in the actual furnace is decreased. Therefore, the construction period and the construction steps are reduced, and at the same time, the accuracy of the installation dimension is improved.

According to an arrangement disclosed in Patent Document 2, a large number of small bricks are gathered and adherently layered via a heat-resistant structural adhesive to form a large complex in a desired shape, which forms a compound brick for covering an interior wall of a metallurgical furnace.

According to such an arrangement disclosed in Patent Document 2, a large number of small bricks are gathered so that the number of units is decreased. Therefore, time necessary for construction of a brick structure can be shortened.

Patent Document: JP-A-07-133989
Patent Document: JP-A-11-037744

### DISCLOSURE OF THE INVENTION

### PROBLEMS TO BE SOLVED BY THE INVENTION

However, either of Patent Documents 1 and 2 only discloses to shorten the installation period by decreasing units of the bricks handled. Improvements on the installation method of the blast-furnace-protective bricks 157 (see, Fig. 1) are not disclosed. As a result, upon installation of the blast-furnace-protective bricks 157, for example, a plurality of small blast-furnace-protective bricks 157 need to be sequentially set up at an installation site of the blast furnace 100. The installation work of the entire blast furnace 100 usually requires around forty days. The installation of the small blast-furnace-protective bricks 157 alone occupies four to five days of the about forty days. Therefore, shortening of the installation period of the blast-furnace-protective bricks 157 is also greatly desired.

An object of the present invention is to provide a blast-furnace-protective integrated carbonaceous block and a blast-furnace installation method of carbonaceous blocks that can shorten a repair period of a blast furnace.

### MEANS FOR SOLVING THE PROBLEMS

A blast-furnace-protective integrated carbonaceous block according to an aspect of the present invention includes: a carbonaceous block that forms a brick layer of a blast furnace; a carbonaceous protective brick adhered to a furnace-interior side of the carbonaceous block via an adhesive; and an antioxidant coated on a furnace-interior side of the carbonaceous protective brick, wherein the carbonaceous protective brick is formed of a carbon brick material inferior to the carbonaceous block in terms of thermal conductivity, anti-corrosion, porosity and homogeneity.

In the above arrangement, a thickness of the carbonaceous brick preferably is between and including 50 mm and 230 mm.

In the above arrangements, a thickness of the antioxidant preferably is between and including 0.5 mm and 3.0 mm.

A furnace installation method of a carbonaceous block that forms a brick layer of a blast furnace according to an aspect of the present invention includes: forming in advance a blast-furnace-protective integrated carbonaceous block by adhering a carbonaceous protective brick to a furnace-interior side of the carbonaceous block via an adhesive and coating an antioxidant on a furnace-interior side of the carbonaceous protective brick; and installing the blast-furnace-protective integrated carbonaceous block to a portion of the brick layer to be repaired, wherein the carbonaceous protective brick is formed of a carbon brick material inferior to the carbonaceous block in terms of thermal conductivity, anti-corrosion, porosity and homogeneity.

In the above method, the blast-furnace-protective integrated carbonaceous block preferably is formed in advance by adhering the carboneous protective brick of a predetermined shape to the furnace-interior side of the carbonaceous block via the adhesive, shaping of the carbonaceous block and the carbonaceous protective brick, having been adhered to each other, to meet shape-requirement of the blast furnace before the coating of the antioxidant, and subsequently coating the antioxidant on the furnace interior side of the carbonaceous protective brick.

In the above methods, the carbonaceous protective brick preferably is formed of a residual carbonaceous block generated in a repair of the blast furnace.

According to the aspects of the present invention, the furnace-interior sides of the carbonaceous blocks of the ring bricks and the like are provided with carbonaceous protective bricks on which the antioxidant is coated. Therefore, the carbonaceous block is prevented from being damaged by raw materials fed from an upper portion of the blast furnace upon a startup of operation of the blast furnace or the oxidative atmosphere in the blast furnace. Furthermore, the thickness and material of the various protective bricks are adjusted, and the type and thickness of the antioxidant are also suitably adjusted. Accordingly, the various protective bricks are dropped during the stable operation of the blast furnace, so that the predetermined furnace capacity required in the production of the pig iron can be retained.

In addition, upon the installation in the blast furnace, blast-furnace protection-integrated block is manufactured in advance by adhering the carbonaceous protective brick on which the antioxidant is coated to the carbonaceous block. Consequently, blast-furnace-protective bricks can be installed in the forms of the above-mentioned various protective bricks simultaneously with the carbonaceous blocks. Accordingly, the work steps and the work time that have been necessary with conventional furnace-protective bricks can be omitted. Therefore, the installation period of the blast furnace can be shortened.

### BRIEF DESCRIPTION OF THE DRAWINGS

Fig. 1 is a cross-sectional side view schematically showing a structure of a vicinity of a hearth of a conventional blast furnace.
Fig. 2 is a cross-sectional side view schematically showing a structure of a vicinity of a hearth of a blast furnace according to an embodiment of the present invention.
Fig. 3A is a perspective view showing a carbonaceous block and a carbonaceous protective brick or a silicon-carbide protective brick adhered to the carbonaceous block in the embodiment.
Fig. 3B is a perspective view showing a blast-furnace-protective integrated carbonaceous block in the embodiment.

### EXPLANATION OF CODES

- 1: blast furnace
- 50: brick layer
- 55: ring brick (carbonaceous block)
- 551: carbonaceous protective brick
- 552: adhesive
- 553: antioxidant
- 55A: carbonaceous block
- 551A: carbonaceous protective brick
- 56: ring brick (carbonaceous block)
- 5 61: carbonaceous protective brick
- 57: bosh brick (carbonaceous block)
- 5 71: carbonaceous protective brick
- C, C1: blast-furnace-protective integrated carbonaceous block

### BEST MODE FOR CARRYING OUT THE INVENTION

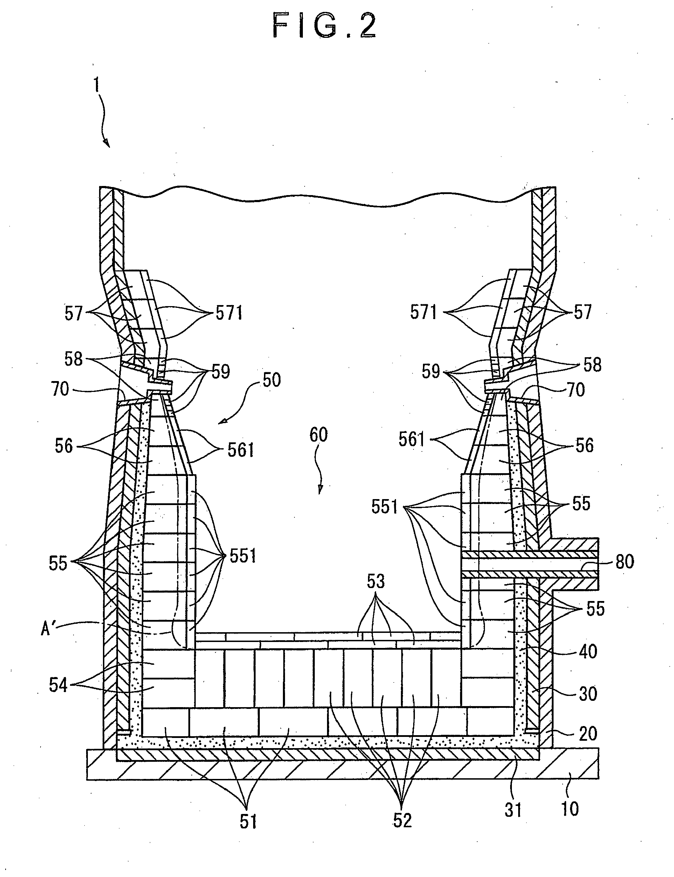

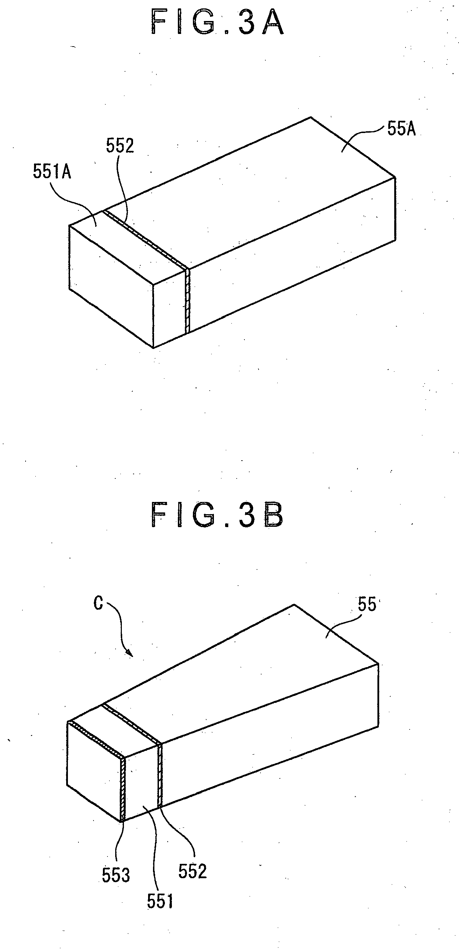

An embodiment of the present invention will be described below with reference to the drawings. Fig. 2 is a cross-sectional side view schematically showing a structure of a vicinity of a hearth of a blast furnace according to the embodiment. Note that the blast furnace shown in Fig. 2 has not been operated yet. Fig. 3A is a perspective view showing a carbonaceous protective brick adhered to a carbonaceous block in the embodiment. Fig. 3B is a perspective view showing a blast-furnace-protective integrated carbonaceous block in the embodiment

### (1-1) Overall Configuration of Blast Furnace 1

As shown in Fig. 2, the blast furnace 1 includes: a base 10; a substantially cylindrical furnace shell 20 standing on the base 10; cooling layers 30 and 31 covering a bottom and an inner lower side of the furnace shell 20; a ramming material layer 40 layered on the cooling layers 30 and 31; and a brick layer 50 layered in a manner covering the upper surface of the ramming material layer 40 and an inner central side and an inner upper side of the furnace shell 20. Further in Fig. 2, 60 is a hearth, 70 is a tuyere, and 80 is a taphole.

The brick layer 50 is constructed by combining a plurality of refractory bricks having different shapes and dimensions. Specifically, the brick layer 50 includes a plurality of deep bricks 51, a plurality of vertically-laid bricks 52, a plurality of surface bricks 53, a plurality of horizontally-laid bricks 54, a plurality of ring bricks 55 and 56, a bosh brick 57, a plurality of tuyere bricks 58, and a plurality of blast-furnace-protective bricks 59. The deep bricks 51, the vertically-laid bricks 52, the plurality of horizontally-laid bricks 54, the plurality of ring bricks 55 and 56, and the bosh brick 57 in the brick layer 50 are carbonaceous blocks formed of monolithic carbon brick members possessing a high thermal conductivity, high anti-corrosion, and low porosity. Each of the bricks has a highly abraded surface. Incidentally, the bosh brick 57 may be formed of a carbonaceous block containing approximately 30 mass percent of SiC. Mortar is coated between adjacent bricks of the various bricks in the brick layer 50 to closely set up the bricks without gap.

The plurality of deep bricks 51 form a disc-like furnace bottom in the hearth 60. The plurality of vertically-laid bricks 52 are respectively shaped in a vertically elongated fashion and vertically laid on the deep bricks 51 to form a substantially pillar-shaped brick layer. The plurality of surface bricks 53 cover a top side of the vertically-laid bricks 52 and have furnace-interior sides exposed to pig iron. The plurality of horizontally-laid bricks 54 are disposed at an outer circumference of the vertically-laid bricks 52 and layered on top of the deep bricks 51.

The plurality of ring bricks 55 are layered on top of the horizontally-laid bricks 54 to form a cylindrical lateral side around the outer circumference of the standing surface bricks 53. As shown in Fig. 3B, the ring brick 55 has a trapezoidal shape in plan view.

As shown in Fig. 3B, a blast-furnace-protective integrated carbonaceous block C according to the present invention is formed by: adhering a carbonaceous protective brick 551 to a furnace-interior side of the ring brick 55 via an adhesive 552; and coating an antioxidant 553 on the furnace-interior side of the carbonaceous protective brick 551.

The carbonaceous protective brick 551 is a substantially rectangular plate formed of a carbon brick material homogeneous or inferior to the carbonaceous blocks such as the ring bricks 55 and the like. In the present invention, the carbonaceous protective brick is formed of a carbon brick material inferior to the carbonaceous block. Thus, since the carbonaceous protective brick 551 is formed of a carbon brick material instead of a conventional chamotte brick or the like, the carbonaceous protective brick 551 can enjoy manufacturing accuracy close to that of the carbonaceous blocks such as the ring bricks 55 or the like. Accordingly, the carbonaceous protective brick 551 and the ring brick 55 have about the same abrasion characteristics, so that the carbonaceous protective brick 551 is not peeled off or chipped off during abrasion process.

Besides, swarf generated when the carbonaceous block such as the ring brick 55 or the like is worked can normally be reused as a recycling material. If the carbonaceous protective brick 551 is formed of a carbon brick material substantially homogeneous to the carbonaceous block such as the ring brick 55 or the like, the swarf of the carbonaceous protective brick 551 and the swarf of the carbonaceous block can be used as a recycling material in a mixed fashion without separation. Furthermore, since the hardness of the carbonaceous protective brick 551 and the hardness of the ring brick 55 are the same, a surface accuracy of the ring brick 55 itself can be prevented from deterioration during working process.

A thickness of the carbonaceous protective brick 551 preferably is between and including 50 mm and 230 mm. Accordingly, the carbonaceous protective brick 551 can suitably function as a blast-furnace-protective brick. Specifically, if the thickness of the carbonaceous protective brick 551 is less than 50 mm, the carbonaceous protective brick 551 is dropped or disappear in an early stage after the startup of the blast-furnace 1, so that the ring brick 55 and the like to be damaged during manufacturing of pig iron is damaged before the manufacturing of pig iron. On the other hand, if the thickness of the carbonaceous protective brick 551 is more than 230 mm, the carbonaceous protective brick 551 is not dropped even during a stable operation of the blast furnace 1, so that the interior capacity of the hearth 60 remains unsuitably small.

Further, it is preferable that the carbonaceous protective brick 551 be formed from a residual carbonaceous block generated in the repair of the blast furnace. Such a carbonaceous block will be mentioned as the residual carbonaceous block without explicitly noting that it is generated during the repair of the blast furnace.

Here, the residual carbonaceous block is a used carbonaceous block taken from the brick layer 50 removed during the repair (to be described below) of the blast furnace 1. Namely, the residual carbonaceous block includes used ones of the deep brick 51, the vertically-laid brick 52, the horizontally-laid brick 54, the ring bricks 55 and 56, and the bosh brick 57.

An unmelted portion of the residual carbonaceous block is cut out and shaped into a substantially rectangular plate to form the carbonaceous protective brick 551. Thus, the residual carbonaceous block which is otherwise unnecessary is utilized for what it is without a dedicated processing.

The adhesive 552 may be, for example, an ambient-temperature curing carbon adhesive. The carbon adhesive may contain, for example, a carbon powder such as calcined anthracite or the like, a synthetic resin liquid such as phenol resin or the like, a hardening agent such as p-toluenesulfonic acid or the like, and a diluent such as ethylene glycol or the like, but is not limited thereto.

An adhesion strength of the adhesive 552 need not be as great as the adhesion strength of the mortar used in bonding between the carbonaceous blocks such as the ring bricks 55 or the like. Specifically, the carbonaceous protective brick 551 weighs approximately 30 to 140 kg, which is lighter than the ring brick 55 weighing approximately 1200 kg. Consequently, a dropout of the carbonaceous protective brick 551 is not likely to be caused by transportation or the like. Accordingly, a strength that endures the shaping process of the blast-furnace-protective integrated carbonaceous block C is enough for the adhesion strength of the adhesive 552, and 10 kg/cm² is enough for an adherently bending strength after calcification. Further, when the above-mentioned adhesive 552 is used in a hot environment, the strength thereof normally is decreased to less than half. Therefore, when the remaining thickness of the carbonaceous protective brick 551 is decreased to 30 mm or less, the carbonaceous protective brick 551 is easily dropped, so that a suitable furnace capacity of the hearth 60 is retained.

The antioxidant 553 prevents the carbonaceous protective brick 551 from damage by oxidative atmosphere in the furnace during the operation of the blast furnace 1, especially during the early stage after the startup. The antioxidant 553 includes, for example, an inorganic oxide containing 70 to 80 mass percent of SiO, 1 to 5 mass percent of Na₂O₃, 5 to 12 mass percent of B₂O₃, and 3 to 10 mass percent of ZrO₂. The antioxidant 553 is formed by, for example, coating a coating agent into which the above inorganic oxide, an organic solvent and the like are kneaded on the furnace-interior side of the carbonaceous protective brick 551. The paste can be coated by any suitable method such as a conventional spraying method and the like.

A thickness of the antioxidant 553 preferably is between and including 0.5 mm and 3.0 mm, and further preferably is between and including 1.2 mm and 2.4 mm. Specifically, if the thickness of the antioxidant 553 is less than 0.5 mm, an interior of the carbonaceous protective brick 551 is oxidized by the oxidative atmosphere in the furnace. Accordingly, the carbonaceous protective brick 551 is damaged and dropped early. On the other hand, if the thickness of the antioxidant 553 is more than 3.0 mm, there is a problem as follows. When the hearth 60 is, for example, exposed to a high temperature environment of 1500 degrees Celsius or higher, a large bulge may be formed on the antioxidant 553. The antioxidant 553 may be peeled at the bulge. Therefore, damage of the carbonaceous protective brick 551 may not be able to be prevented. Note that the effects are confirmed by the examples to be described below.

The plurality of ring bricks 56 are layered at a location higher than the ring bricks 55 and lower than the tuyere 70 to form a cylindrical lateral side (see, Fig. 2). The carbonaceous protective brick 561 is adhered also to a furnace-interior side of the ring brick 56 via an adhesive (not shown). The antioxidant (not shown) is coated on a furnace-interior side of the carbonaceous protective brick 561. Such an arrangement provides a blast-furnace-protective integrated carbonaceous block (not shown) including the ring brick 56, which has an arrangement similar to the blast-furnace-protective integrated carbonaceous block C including the ring brick 55.

Incidentally, the carbonaceous protective brick 561 having a thickness between and including 50 mm and 230 mm is thinner than the carbonaceous protective brick 551 adhered to the ring brick 55, but may be as thick as the carbonaceous protective brick 551.

The plurality of bosh bricks 57 are layered on top of the tuyere brick 58 to form a cylindrical lateral side (see, Fig. 2). The carbonaceous protective brick 571 is adhered also to a furnace-interior side of the bosh brick 57 via an adhesive (not shown). The antioxidant (not shown) is coated on a furnace-interior side of the carbonaceous protective brick 571. Such an arrangement provides a blast-furnace-protective integrated carbonaceous block (not shown) including the bosh brick 57, which has an arrangement similar to the blast-furnace-protective integrated carbonaceous block C including the ring brick 55.

Incidentally, the carbonaceous protective brick 571 having a thickness between and including 50 mm and 230 mm is thinner than the carbonaceous protective brick 551 adhered to the ring brick 55, but may be as thick as the carbonaceous protective brick 551.

The plurality of the tuyere bricks 58 are layered on top of the ring bricks 56 in a manner surrounding the tuyere 70. A brick made of SiC is normally employed for the tuyere brick 58. Hot blast of 1200 to 1300 degrees Celsius is always blown through the tuyere 70. Accordingly, the vicinity of the tuyere 70 is always in oxidative atmosphere, so that the tuyere brick 58 is a conventional compact oxidant blast-furnace-protective brick 59 instead of the carbonaceous protective brick according to the present invention.

### (1-2) Operation of Blast Furnace 1

Next, the operation of the blast furnace 1 will be described.

Upon the startup of the operation of the blast furnace 1, raw materials are fed from an upper portion of the blast furnace 1. Subsequently, hot blast of high temperature is blown through the tuyere 70. At this time, the carbonaceous protective bricks 551, 561, and 571 and the blast-furnace-protective bricks 59 prevent the ring bricks 55 and 56, the bosh brick 57, the tuyere bricks 58 and the like from being worn upon the feeding of the raw materials.

The heated raw materials turn to pig iron and accumulate in the hearth 60. When the pig iron is drained through the taphole 80 (in the early period of the operation), the furnace condition does not stabilize as a large amount of slag is generated in the early stage of the operation. The operation of the blast furnace 1 stabilizes after several months. Before the blast furnace 1 stabilizes, the carbonaceous protective bricks 551, 561, and 571 and the blast-furnace-protective bricks 59 on which the antioxidant 553 is coated prevents the ring bricks 55 and 56, the bosh brick 57, and the tuyere bricks 58 from being damaged by the oxidative atmosphere and the large amount of slag in the furnace. Incidentally, since the antioxidation is required only in the very early stage of the operation, the carbonaceous blocks can be sufficiently protected from the oxidative atmosphere only by coating the antioxidant 553 on the carbonaceous protective bricks 551.

The carbonaceous protective bricks 551, 561, and 571 and the blast-furnace-protective bricks 59 are dropped when the operation stabilizes (i.e. several months after the startup). Accordingly, the furnace capacity of the hearth 60 is expanded in the stable operation period of the blast furnace 1 to retain a predetermined furnace capacity necessary for production of pig iron.

During subsequent production of pig iron, though the brick layer 50 is cooled by the cooling layers 30 and 31 via the ramming material layer 40, the hearth 60 continues to be exposed to the high temperature environment of 1500 degrees Celsius or higher. Accordingly, the brick layer 50, especially the plurality of ring bricks 55 and 56 and the like melt from the inner side thereof. When the melting damage of the brick layer 50 advances approximately to an extent shown by the dash line A' in Fig. 2, a life of the blast furnace 1 is over and the operation of the blast furnace 1 is suspended. After the operation of the blast furnace 1 is suspended, the entire blast furnace 1 is repaired accompanying the exchange of the brick layer 50.

### (1-3) Repair Method for Blast Furnace

The repair of the entire blast furnace 1 is conducted after the operation of the blast furnace 1 is suspended. The repair of the blast furnace 1 includes: removal of the furnace shell 20, the cooling layer 30, the ramming material layer 40, and the brick layer 50; and construction of a new furnace shell 20, a new cooling layer 30, a new ramming material layer 40 and a new brick layer 50. Note that the furnace shell 20 is not always dismantled but is sometimes reused.

For example, when the repair work is conducted for the blast furnace 1 placed on a foundation, a large crane (not shown) fixed to a vicinity of the blast furnace 1 is employed. While dismantling is conducted sequentially from an upper portion of a furnace body to the furnace bottom, dismantled members are brought out to the exterior through the furnace top. Subsequently, new members are brought into the interior of the furnace through the furnace top in an exactly inverse manner to construct a new ramming material layer 40 and a brick layer 50.

As another example, a so-called block method may also be employed for the repair work. The blast furnace 1 is disassembled to a plurality of blocks, which are carried away from the foundation. A plurality of new blocks constructed in advance at a location other than the foundation is then carried to the site and assembled there.

Both of the first repair method for the blast furnace 1 in which the furnace-top crane is employed and the second repair method for the blast furnace 1 in which the blocks are lifted up include a preparation process in which the various bricks that form the brick layer 50 are manufactured and an installation process in which the various bricks manufactured in the preparation process are set up to construct the brick layer 50.

### (1-3-1) Preparation Process

A manufacturing process of the ring brick 55 will be described to show an example of the preparation process in which the various bricks that form the brick layer 50 are manufactured.

Initially, the carbon brick material is molded into, for example, a rectangular parallelepiped by press molding or the like, which is then burned to prepare the carbonaceous block 55A (see, Fig. 3A). On the other hand, an inferior carbon brick material or the residual carbonaceous block is cut out into, for example, a substantially rectangular plate to prepare the carbonaceous protective brick 551A (see, Fig. 3A). Subsequently, the carbonaceous protective brick 551A is adhered to the furnace-interior side of the carbonaceous block 55A via the adhesive 552, as shown in Fig. 3A. After adhesion, the now integrated carbonaceous block 55A and the carbonaceous protective brick 551A are cut and abraded to a substantially trapezoidal shape in plan view as shown in Fig 3B to meet shape-requirement of the furnace. Thus, the ring brick 55 and the carbonaceous protective brick 551 possessing a predetermined dimension and surface accuracy are formed.

Subsequently, for example, a coating agent is coated on the furnace-interior side of the carbonaceous protective brick 551 by a spraying method or the like to form the antioxidant 553, which is naturally dried. Here, an inorganic oxide containing 70 to 80 mass percent of SiO, 1 to 5 mass percent of Na₂O₃, 5 to 12 mass percent of B₂O₃, and 3 to 10 mass percent of ZrO₂, an organic solvent and the like are kneaded in the above coating agent. As a result, the blast-furnace-protective integrated carbonaceous block C having the ring brick 55, the carbonaceous protective brick 551, and the antioxidant 553, as shown in Fig. 3B, is provided.

Incidentally, after the blast-furnace-protective integrated carbonaceous block C is formed as described above, a pair of the blast-furnace-protective integrated carbonaceous blocks C adjacent to each other may be bonded via an adhesive such as mortar or the like to provide a block complex (not shown).

The ring brick 56 and the bosh brick 57 undergo a similar process. A blast-furnace-protective integrated carbonaceous block (not shown) having the ring brick 56, the carbonaceous protective brick 561, and an antioxidant (not shown) is prepared. A blast furnace protection-integrated carbonaceous block (not shown) having the bosh block 57, the carbonaceous protective brick 571, and an antioxidant (not shown) is prepared.

After a plurality of individual bricks or block complexes possessing predetermined dimension accuracy are manufactured, these bricks are layered without adhesion for a temporary setup, of which dimension is checked and inspected. After the inspection, fine adjustment of the brick dimension is conducted if necessary. The preparation process ends here.

### (1-3-2) Installation Step

Next, the installation step will be described.

The repair work of the blast furnace includes dismantling the blast furnace 1 whose operation has been suspended as mentioned above and constructing a new blast furnace. The construction begins by building the furnace shell 20, and then cooling layers 30 and 31 are provided. After the cooling layers 30 and 31 are provided, the installation step in the interior of the blast furnace begins.

The installation step begins with construction of the ramming material layer 40 at the lowest location. Subsequently, the deep brick 51, the vertically-laid brick 52, and the horizontally-laid brick 54 are installed with a hoist (not shown) equipped in the furnace. Then the ramming material layer 40 at the outer circumference is constructed. In other words, the members are layered sequentially from the bottom.

The ring brick section is installed as follows. The blast-furnace-protective integrated carbonaceous block formed by adhering the carbonaceous protective bricks 551 and 561 and the like to the ring bricks 55 and 56 are coated mortar at the bonding surfaces thereof and sequentially layered in a circumferential direction. After installation of a line is completed, the ramming material layer 40 is constructed. Lines of the bricks are installed one by one in this manner. Similarly, the tuyere bricks 58, the blast-furnace-protective bricks 59, and the blast-furnace-protective integrated carbonaceous block formed by adhering the carbonaceous protective brick 571 and the like to the bosh bricks 57 are layered before the installation is completed.

A repair work of a blast furnace usually takes about 120 days, a third of which, namely about 40 days, is spent for the installation process. According to an arrangement disclosed in Patent Document 1, the installation process is shortened by using block complexes prepared in advance by adhering a plurality of carbon bricks. In other words, the installation period is shortened by reducing the number of members handled.

Conventionally, the carbonaceous bricks have been brought into the furnace interior, for example, through openings such as the taphole 180 or the tuyere 170 shown in Fig. 1. However, when the block complexes are employed as is the case with Patent Document 1, openings such as the taphole 180 and the like cannot be used, so that a large opening on the furnace shell is needed in the vicinity of the installation location of the bosh brick 156.

Accordingly, extra steps of a restoration step in which the opening on the furnace shell 120 is mended in one or two days and a construction step in which a corresponding portion of the cooling layer 130 is constructed are needed other than the installation process. Therefore, even though the number of the bricks installed is small, the shortening effect of the construction period may not be sufficiently exhibited. In addition, depending on an arrangement of a blast furnace, a space for carrying the bricks in may not be found in the vicinity of the installation location of the bosh brick 156. In this case, since the block complexes cannot be brought into the furnace interior, the arrangement disclosed in Patent Document 1 cannot be employed.

According to the present invention, the various protective bricks are adhered to furnace-interior sides of conventional ring bricks prior to installation. In other words, the bricks are enlarged only in length. Therefore, the carbonaceous blocks can be brought into the furnace interior through the taphole 80 or the tuyere 70, thereby requiring no restoration step of the furnace shell and the like as described above. Thus, the installation process can be shortened in accordance with the amount of the protection-integrated carbonaceous blocks used.

Conventionally, the installation of the blast-furnace-protective brick 157 (see, Fig. 1) takes about four actual working hours for a line of bricks. If the present invention is employed for installation of four lines, the installation period can be shortened by a day in day-and-night work basis. If the present invention is employed for all of the ring bricks 55 and 56 and the bosh bricks 57, the construction period can be shortened by four to five days in a blast furnace of 4000 to 5000 m³ class.

If the above-mentioned block complex is employed at the same time, the construction period can be further shortened.

### (1-4) Effects of Embodiment

The following effects can be obtained according to the embodiment.

(1-4-1) The blast-furnace-protective integrated carbonaceous block C includes: the ring brick 55 that forms the brick layer 50 of the blast furnace 1; the carbonaceous protective brick 551 adhered to the furnace-interior side of the ring brick 55 via the adhesive 552; and the antioxidant 553 coated on the furnace-interior side of the carbonaceous protective brick 551.

If the carbonaceous protective brick 551 is formed by the carbon brick material substantially homogeneous to the ring brick 55, then, when the carbonaceous block 55A to which the carbonaceous protective brick 551A is adhered is abraded, uniform abrasion hardness is afforded. Hence, abrasion processing can be conducted in a well balanced manner and with high accuracy. In addition, the swarf generated during the processing is of substantially homogeneous carbon brick material, which can be recycled without separation.

The carbonaceous protective brick 551 to which the antioxidant 553 is coated is provided to the furnace-interior side of the ring brick 55. Accordingly, the ring brick 55 can be prevented from being damaged by the raw materials fed from the upper portion of the blast furnace 1 upon the startup of the operation or by the oxidative atmosphere of the furnace interior. Furthermore, the thickness and material of the carbonaceous protective brick 551 are adjusted, and the type and thickness of the antioxidant are also adjusted. As a consequence, the carbonaceous protective brick is dropped during the stable operation, so that the predetermined furnace capacity required in the production of the pig iron can be retained.

Upon the installation of the blast furnace, the blast-furnace-protective integrated carbonaceous block is manufactured in advance by adhering the carbonaceous protective brick 551 to the ring brick 55. Accordingly, the carbonaceous protective brick 551 that serves as the protective brick for the blast furnace can be installed at the same time as the ring brick 55 is installed. Therefore, the work steps and the work time for installation of the conventional blast-furnace-protective brick can be omitted to shorten the overall installation period of a blast furnace.

(1-4-2) The thickness of the carbonaceous protective brick 551 preferably is between and including 50 mm and 230 mm.

In the operation of the blast furnace 1, on account of such a carbonaceous protective brick 551, the ring brick 55 to be damaged during the production of pig iron can be prevented from being damaged before the production of pig iron. Moreover, the carbonaceous protective brick 551 can be dropped around the stable production period of pig iron to retain the predetermined furnace capacity of the hearth 60 required for production of pig iron.

(1-4-3) The thickness of the antioxidant 553 preferably is between and including 0.5 mm and 3.0 mm.

On account of such a carbonaceous protective brick 551, the antioxidant 553 is not peeled before production of pig iron. Accordingly, the interior of the carbonaceous protective brick 551 is prevented from being oxidized by the oxidative atmosphere of the furnace interior and a large amount of slag. Therefore, the ring brick 55 can be prevented from damage due to oxidation.

(1-4-4) The carbonaceous protective brick 551 preferably is formed of the residual carbonaceous block generated during the repair of the blast furnace.

An unmelted portion of the residual carbonaceous block is cut out to form the carbonaceous protective brick 551. Accordingly, the residual carbonaceous block which is otherwise unnecessary is recycled for what it is without a dedicated processing. Therefore, resource saving can efficiently be accomplished.

Furthermore, the carbonaceous protective brick 551 formed from the residual carbonaceous block is the same material as the ring brick 55. Therefore, the ring brick 55 to which the carbonaceous protective brick 551 is adhered can be properly abraded, and the swarf generated during the processing can be recycled without separation.

(1-4-5) The installation method of the ring brick 55 in the blast furnace 1 is as follows. The carbonaceous protective brick 551 is adhered to the furnace-interior side of the ring brick 55 via the adhesive 552, and the antioxidant 553 is coated on the furnace-interior side of the carbonaceous protective brick 551 to yield the blast-furnace-protective integrated carbonaceous block C in advance. The brick layer 50 is constructed by the various bricks including the blast-furnace-protective integrated carbonaceous block C.

According to the installation method of the ring brick 55, the carbonaceous protective brick 551 is adhered to the ring brick 55 in advance, so that the carbonaceous protective brick 551 that serves as the protective brick for the blast furnace can be installed at the same time as the ring brick 55 is installed. Accordingly, the work steps and the work period for installation of the carbonaceous protective brick 551 can be reduced. Therefore, the overall repair period of the blast furnace 1 can be shortened.

(1-4-6) Further, the repair method for the ring brick 55 in the blast furnace 1 preferably is as follows. The carbonaceous protective brick 551A shaped in a substantially rectangular plate is adhered to the furnace-interior side of the rectangular parallelepiped carbonaceous block 55A a rectangular parallelepiped via the adhesive 552. The now integrated carbonaceous block 55A and the carbonaceous protective brick 551A are formed to a substantially trapezoidal shape in plan view. Then, the antioxidant 553 is coated on the furnace-interior side of the carbonaceous protective brick 551 to yield the blast-furnace-protective integrated carbonaceous block C in advance.

According to the repair method of the ring brick 55, the integrated carbonaceous block 55A and the carbonaceous protective brick 551A are shaped to meet the shape-requirement of the furnace. Therefore, the work steps can be greatly reduced as compared to a conventional arrangement in which the carbonaceous protective brick 551 is independently cut and abraded to have its shape changed. Moreover, the shape of the carbonaceous protective brick 551 is adapted to the shape of the ring brick 55 with high accuracy. In the installation process, the carbonaceous protective brick 551 can be disposed at an optimum position without position adjustment.

If the carbonaceous block 55A and the carbonaceous protective brick 551A are formed of homogeneous materials, this results in the same the mechanical strengths upon the shaping process. Hence, cutting and abrasion processing can be conducted in a well-balanced manner and with high accuracy. In addition, the swarf generated during the processing is substantially homogeneous carbon brick materials, which can be recycled without separation.

(1-4-7) The preparation process of the repair method of the blast furnace 1 is as follows. The carbonaceous protective bricks 551, 561, and 571 are adhered to the carbonaceous blocks of the ring bricks 55 and 56 and the bosh bricks 57 to form the blast-furnace-protective integrated carbonaceous blocks. Further, the blast-furnace-protective integrated carbonaceous blocks adjacent to each other may be adhered to form a block complex. In the subsequent installation process, the deep brick 51, the vertically-laid brick 52, the surface brick 53, the horizontally-laid brick 54, the blast-furnace-protective integrated carbonaceous block, the tuyere brick 58, and the blast-furnace-protective brick 59 are set up to form the brick layer 50.

Since the carbonaceous protective bricks 551, 561, and 571 are adhered to the ring bricks 55 and 56 and the bosh bricks 57, the setup work steps can be greatly reduced as compared to a conventional arrangement in which protective bricks are sequentially constructed. Therefore, the overall repair period of the blast furnace 1 can be shortened.

Incidentally, the same effects as the above effects (1-4-1) to (1-4-7) of the blast-furnace-protective integrated carbonaceous block C having the ring brick 55 can be obtained with the blast-furnace-protective integrated carbonaceous block having the ring brick 56, the carbonaceous protective brick 561, and the antioxidant coated on the furnace-interior side of the carbonaceous protective bricks 561, or the blast-furnace-protective integrated carbonaceous block having the bosh brick 57, the carbonaceous protective brick 571, and antioxidant coated on the furnace-interior side of the carbonaceous protective bricks 571.

### (1-5) Modifications of Embodiment

It should be noted that the present invention is not limited to the above embodiments, but includes modifications, improvements or the like as far as an object of the present invention is achieved.

Specifically, whereas the brick layer 50 in the embodiment includes the deep brick 51, the vertically-laid brick 52, the surface brick 53, the horizontally-laid brick 54, the ring bricks 55 and 56, the bosh brick 57, the tuyere brick 58, and the blast-furnace-protective brick 59 as shown in Fig. 2, the scope of the present invention is not limited thereto. In short, the brick layer according to the present invention is not limited to that shown in Fig. 2, but any suitable shapes, dimensions, and quantities of the bricks can be employed.

In the embodiment, the blast-furnace-protective integrated carbonaceous block is formed by adhering the carbonaceous protective bricks 551, 561, and 571 to the carbonaceous blocks of the ring bricks 55 and 56 and the bosh bricks 57, but the scope of the present invention is not limited thereto. For example, only the blast-furnace protection-integrated protection carbonaceous block C of the ring brick 55 may be formed while the blast-furnace-protective integrated carbonaceous blocks of the other carbonaceous blocks are not formed. Such an arrangement still achieves shortening of the repair period of the blast furnace 1 since the carbonaceous protective brick 551 can be installed simultaneously with the ring brick 55.

In the embodiment, the antioxidant 553 is, for example, an inorganic oxide containing 70 to 80 mass percent of SiO₂, 1 to 5 mass percent of Na₂O₃, 5 to 12 mass percent of B₂O₃, 3 to 10 mass percent of ZrO₂, but the kinds of the components, the composition ratio, and the like are not limited thereto, and any other suitable antioxidant can be employed.

In the embodiment, upon manufacturing the blast-furnace-protective integrated carbonaceous blocks, the antioxidant is coated after the carbonaceous protective brick or the silicon-carbide protective brick is adhered to the furnace-interior side of the carbonaceous blocks of the ring brick 55 and the like, but the scope of the present invention is not limited thereto. For example, the antioxidant may be formed in advance on the furnace-interior side of the carbonaceous protective brick or the silicon-carbide protective brick, which is adhered to the furnace-interior side of the carbonaceous block afterwards. In this case, the same effects as the above embodiments can still be obtained. Specifically, the repair period of the blast furnace 1 can be shortened.

### (2) Examples

Next, examples to confirm the effects of the above embodiments will be described.

### (2-1) Effects ofAntioxidant

An experiment was conducted to confirm the effects of the antioxidant according to the above embodiment. In the experiment, a cubic carbon brick of 90 mm * 90 mm * 90 mm was employed as the carbonaceous protective brick 551. Regarding the antioxidant, a coating agent in which oxide powder containing 70 to 80 mass percent of SiO₂, 1 to 5 mass percent of Na₂O₃, 5 to 12 mass percent of B₂O₃, and 3 to 10 mass percent of ZrO₂ and an organic solvent had been kneaded was brush coated on the outer surface of the carbon brick. After the coating agent was coated, the block was burned in ambient atmosphere at 1000 degrees Celsius for 24 hours. After the burning, appearances of the antioxidants were observed, before the carbon bricks were cut to measure the oxidation depth of the brick interior. The maximum oxidation depth in the perpendicular direction relative to the surface was taken as the oxidation depth. Table 1 shows a film-thickness of the antioxidant, a surface condition after burning, the oxidation depth, and evaluation of antioxidant functionality in the samples.

**(Table 1)**

| | FILM-THICKNESS (mm) | SURFACE CONDITION | OXIDATION DEPTH (mm) | EVALUATION |
|---|---|---|---|---|
| EXAMPLE 1-1 | 0.5 | MICROCRACK | 0.5 | B |
| EXAMPLE 1-2 | 1.2 | GOOD | 0 | A |
| EXAMPLE 1-3 | 2.4 | SMALL BULGE | 0 | B |
| EXAMPLE 1-4 | 3.0 | MEDIUM BULGE | 0 | B |
| COMPARATIVE EXAMPLE 1-1 | 0 | WHITE OXIDATION | 12.0 | C |
| COMPARATIVE EXAMPLE 1-2 | 0.3 | MICROCRACK | 6.0 | C |
| COMPARATIVE EXAMPLE 1-3 | 3.5 | PARTIAL PEELING | 10 | C |
| COMPARATIVE EXAMPLE 1-4 | 5.0 | PEELING | 12 | C |

| | | | | |
|---|---|---|---|---|
| A: EXCELLENT, B: GOOD, C: UNSUITABLE | | | | |

According to Table 1, when the thickness of the antioxidant was between and including 0.5 mm and 3.0 mm (Examples 1-1 to 1-4), little oxidation progressed on the surface and the interior of the carbon brick. In particular, when the thickness of the antioxidant was between and including 1.2 mm and 2.4 mm (Examples 1-2 and 1-3), the surface condition of the antioxidant was good, having undergone no oxidation.

On the other hand, when the thickness of the antioxidant was 0.3 mm or smaller (Comparative Examples 1-1 and 1-2), oxidation progressed in the surface and the interior of the carbon brick. In particular, in the Comparative Example 1-1 without antioxidant coating, oxidation greatly progressed. In the example 1-2 where the thickness of the antioxidant was 0.5 mm, it is deduced that microcrack was likely to occur due to the thinness of the oxidant, through which oxygen found a way to enter the interior of the carbon brick, resulting in progress of oxidation.

When the thickness of the antioxidant was larger than 3.5 mm (Comparative Examples 1-3 and 1-4), a portion of or most of the oxidant peeled, so that the surface and the interior of the carbon brick underwent oxidation.

From the above, it was proved that oxidation in the surface and the interior of the carbon bricks can be prevented by setting the thickness of the antioxidant at between and including 0.5 mm and 3 mm, preferably between and including 1.2 mm and 2.4 mm

### (2-2) Effects of Carbonaceous Protective Bricks

Effects of the carbonaceous protective bricks in the above embodiments were confirmed in an actual furnace.

At A ironworks (Example 2-1), the carbonaceous protective brick 551 having a thickness of 100 mm was adhered to the furnace-interior of the ring brick 55, the carbonaceous protective brick 561 having a thickness of 75 mm was adhered to the furnace-interior side of the ring brick 56, the carbonaceous protective brick 571 having a thickness of 40 mm was adhered to the furnace-interior side of the bosh brick 57, and these carbonaceous bricks were installed to the blast furnace 1.

At B ironworks (Example 2-2), the carbonaceous protective brick 551 having a thickness of 300 mm was adhered to the furnace-interior side of the ring brick 55, the carbonaceous protective brick 561 having a thickness of 230 mm was adhered to the furnace-interior side of the ring brick 56, the carbonaceous protective brick 571 having a thickness of 50 mm is adhered to the furnace-interior side of the bosh brick 57, and these carbonaceous bricks were installed to the blast furnace 1.

Each of the blast furnaces 1 constructed was operated, and dropout conditions of the carbonaceous protective bricks were observed.

The result at A ironworks (Example 2-1) was as follows. The carbonaceous protective bricks 571 arranged on the surfaces of the bosh bricks 57 were dropped 0.5 months after the start of the operation. The carbonaceous protective bricks 551 and 561 arranged on the surfaces of the ring bricks 55 and 56 were dropped after six to eight months after the start of the operation.

The result at B ironworks (Example 2-2) was as follows. The carbonaceous protective bricks 561 and 571 arranged on the surfaces of the ring bricks 56 and the bosh bricks 57 were dropped five to nine months after the start of the operation. The carbonaceous protective bricks 551 arranged on the surfaces of the ring bricks 55 remained one year after the start of the operation.

As mentioned above, in Example 2-1, the carbonaceous protective brick 571 having a thickness of 40 mm was dropped early, thereby not protecting the bosh brick 57. On the other hand, the carbonaceous protective bricks 551 and 561 were dropped at a timing when the operation stabilized (i.e. approximately six months after the start of the operation), thereby retaining a sufficient furnace capacity during the stable operation. In Example 2-2, the carbonaceous protective bricks 551 remained until and during the stable operation, so that a sufficient furnace capacity was not retained.

Accordingly, the carbon protective bricks can be dropped at a timing when the operation stabilizes by setting the thickness of the carbonaceous protective brick at between and including 50 mm and 230 mm. In this case, a sufficient furnace capacity can be retained.

### INDUSTRIAL APPLICABILITY

The present invention can be utilized for protecting a carbonaceous block used in a blast furnace and for a furnace installation method for the carbonaceous block.

## Claims

1. A blast-furnace-protective integrated carbonaceous block, comprising:
a carbonaceous block (55, 56, 57) that forms a brick layer of a blast furnace;
a carbonaceous protective brick (551, 561, 571) adhered to a furnace-interior side of the carbonaceous block (55, 56, 57) via an adhesive (552); and
an antioxidant (553) coated on a furnace-interior side of the carbonaceous protective brick (551, 561, 571),
wherein the carbonaceous protective brick (551, 561, 571) is formed of a carbon brick material inferior to the carbonaceous block (55, 56, 57) in terms of thermal conductivity, anti-corrosion, porosity and homogeneity.

2. The blast-furnace-protective integrated carbonaceous block according to claim 1, wherein
a thickness of the carbonaceous protective brick (551, 561, 571) is between and including 50 mm and 230 mm.

3. The blast-furnace-protective integrated carbonaceous block according to any one of claims 1 or 2, wherein
a thickness of the antioxidant (553) is between and including 0.5 mm and 3.0 mm.

4. A furnace installation method of a carbonaceous block that forms a brick layer of a blast furnace, the method comprising:
forming in advance a blast-furnace-protective integrated carbonaceous block by adhering a carbonaceous protective brick (551, 561, 571) to a furnace-interior side of the carbonaceous block (55, 56, 57) via an adhesive (552) and
coating an antioxidant (553) on a furnace-interior side of the carbonaceous protective brick (551, 561, 571); and
installing the blast-furnace-protective integrated carbonaceous block to a portion of the brick layer to be repaired,
wherein the carbonaceous protective brick (551, 561, 571) is formed of a carbon brick material inferior to the carbonaceous block (55, 56, 57) in terms of thermal conductivity, anti-corrosion, porosity and homogeneity.

5. The furnace installation method of the carbonaceous block of the blast furnace according to claim 4, wherein
the blast-furnace-protective integrated carbonaceous block is formed in advance by adhering the carbonaceous protective brick (551, 561, 571) of a predetermined shape to the furnace-interior side of the carbonaceous block (55, 56, 57) via the adhesive (552), shaping the carbonaceous block (55, 56, 57) and the carbonaceous protective brick (551, 561, 571), having been adhered to each other, to meet shape-requirement of the blast furnace, and subsequently coating the antioxidant (553) on the furnace interior side of the carbonaceous protective brick (551, 561, 511).

6. The furnace installation method of the carbonaceous block according to claim 4 or claim 5, wherein
the carbonaceous protective brick (551, 561, 571) is formed of a residual carbonaceous block generated in a repair of the blast furnace.

## Patentansprüche

1. Integrierter kohlenstoffhaltiger Hochofenschutz-Block, der Folgendes umfasst:
einen kohlenstoffhaltigen Block (55, 56, 57), der eine Steinlage eines Hochofens bildet;
einen kohlenstoffhaltigen Schutzstein (551, 561, 571), der mittels eines Klebstoffs (552) an eine ofeninterne Seite des kohlenstoffhaltigen Blocks (55, 56, 57) geklebt ist; und
ein Antioxidationsmittel (553), das auf eine ofeninterne Seite des kohlenstoffhaltigen Schutzsteins (551, 561, 571) aufgebracht ist,
wobei der kohlenstoffhaltige Schutzstein (551, 561, 571) aus einem Kohlenstoffsteinmaterial hergestellt ist, das in Bezug auf Wärmeleitfähigkeit, Korrosionsschutz, Porosität und Homogenität schlechter als der kohlenstoffhaltige Block (55, 56, 57) ist.

2. Integrierter kohlenstoffhaltiger Hochofenschutz-Block nach Anspruch 1, wobei
eine Dicke des kohlenstoffhaltigen Schutzsteins (551, 561, 571) zwischen und einschließlich 50 mm und 230 mm liegt.

3. Integrierter kohlenstoffhaltiger Hochofenschutz-Block nach einem der Ansprüche 1 oder 2, wobei
eine Dicke des Antioxidationsmittels (553) zwischen und einschließlich 0,5 mm und 3,0 mm liegt.

4. Ofenmontageverfahren für einen kohlenstoffhaltigen Block, der eine Steinlage eines Hochofens bildet, wobei das Verfahren Folgendes umfasst:
Bilden eines integrierten kohlenstoffhaltigen Hochofenschutz-Blocks im Voraus durch Kleben eines kohlenstoffhaltigen Schutzsteins (551, 561, 571) an eine ofeninterne Seite des kohlenstoffhaltigen Blocks (55, 56, 57) mittels eines Klebstoffs (552) und
Aufbringen eines Antioxidationsmittels (553) auf eine ofeninterne Seite des kohlenstoffhaltigen Schutzsteins (551, 561, 571) und
Montieren des integrierten kohlenstoffhaltigen Hochofenschutz-Blocks an einem Teil der zu reparierenden Steinlage,
wobei der kohlenstoffhaltige Schutzstein (551, 561, 571) aus einem Kohlenstoffsteinmaterial hergestellt ist, das in Bezug auf Wärmeleitfähigkeit, Korrosionsschutz, Porosität und Homogenität schlechter als der kohlenstoffhaltige Block (55, 56, 57) ist.

5. Ofenmontageverfahren für den kohlenstoffhaltigen Block des Hochofens nach Anspruch 4, wobei
der integrierte kohlenstoffhaltige Hochofenschutz-Blocks im Voraus gebildet wird, indem der kohlenstoffhaltige Schutzstein (551, 561, 571) mit einer vorherbestimmten Form mittels des Klebstoffs (552) an die ofeninterne Seite des kohlenstoffhaltigen Blocks (55, 56, 57) geklebt wird, der kohlenstoffhaltige Block (55, 56, 57) und der kohlenstoffhaltige Schutzstein (551, 561, 571), die aneinander geklebt wurden, geformt werden, um eine Formbedingung des Hochofens zu erfüllen, und anschließend das Antioxidationsmittel (553) auf die ofeninterne Seite des kohlenstoffhaltigen Schutzsteins (551, 561, 571) aufgebracht wird.

6. Ofenmontageverfahren für den kohlenstoffhaltigen Block nach Anspruch 4 oder 5, wobei
der kohlenstoffhaltige Schutzstein (551, 561, 571) aus einem kohlenstoffhaltigen Restblock hergestellt wird, der bei einer Reparatur des Hochofens erzeugt wurde.

## Revendications

1. Bloc carboné intégré à une protection pour haut fourneau, comportant :
un bloc carboné (55, 56, 57) qui forme une couche de briques d'un haut fourneau ;
une brique de protection carbonée (551, 561, 571) collée au niveau d'un côté intérieur de haut fourneau du bloc carboné (55, 56, 57) au moyen d'un adhésif (552) ; et
un antioxydant (553) enduit sur un côté intérieur de haut fourneau de la brique de protection carbonée (551, 561, 571),
dans lequel la brique de protection carbonée (551, 561, 571) est formée à partir d'une matière de brique de carbone inférieure au bloc carboné (55, 56, 57) en termes de conductibilité thermique, d'anticorrosion, de porosité et d'homogénéité.

2. Bloc carboné intégré à une protection pour haut fourneau selon la revendication 1, dans lequel
une épaisseur de la brique de protection carbonée (551, 561, 571) est comprise entre 50 mm et 230 mm inclus.

3. Bloc carboné intégré à une protection pour haut fourneau selon l'une quelconque des revendications 1 ou 2, dans lequel
une épaisseur de l'antioxydant (553) est comprise entre 0,5 mm et 3,0 mm inclus.

4. Procédé d'installation pour haut fourneau d'un bloc carboné qui forme une couche de briques d'un haut fourneau, le procédé comportant :
l'étape consistant à former à l'avance un bloc carboné intégré à une protection pour haut fourneau en collant une brique de protection carbonée (551, 561, 571) sur un côté intérieur de haut fourneau du bloc carboné (55, 56, 57) au moyen d'un adhésif (552) et
l'étape consistant à enduire un antioxydant (553) sur un côté intérieur de haut fourneau de la brique de protection carbonée (551, 561, 571) ; et
l'étape consistant à installer le bloc carboné intégré à une protection pour haut fourneau sur une partie de la couche de briques devant être réparée,
dans lequel la brique de protection carbonée (551, 561, 571) est formée à partir d'une matière de brique de carbone inférieure au bloc carboné (55, 56, 57) en termes de conductibilité thermique, d'anticorrosion, de porosité et d'homogénéité.

5. Procédé d'installation pour haut fourneau du bloc carboné du haut fourneau selon la revendication 4, dans lequel
le bloc carboné intégré à une protection pour haut fourneau est formé à l'avance en collant la brique de protection carbonée (551, 561, 571) d'une forme prédéterminée sur le côté intérieur de haut fourneau du bloc carboné (55, 56, 57) au moyen de l'adhésif (552), en façonnant le bloc carboné (55, 56, 57) et la brique de protection carbonée (551, 561, 571), ayant été collés l'un par rapport à l'autre, pour satisfaire à l'exigence de forme du haut fourneau, et en enduisant par la suite l'antioxydant (553) sur le côté intérieur de haut fourneau de la brique de protection carbonée (551, 561, 571).

6. Procédé d'installation pour haut fourneau d'un bloc carboné selon la revendication 4 ou la revendication 5, dans lequel
la brique de protection carbonée (551, 561, 571) est formée à partir d'un bloc carboné résiduel généré au cours d'une réparation du haut fourneau.
